# EUROPÄISCHE PATENTSCHRIFT

(11) **EP 1 035 794 B1**
(45) Veröffentlichungstag und Bekanntmachung des Hinweises auf die Patenterteilung: **27.02.2002**
(21) Anmeldenummer: 98963512.3
(22) Anmeldetag: 25.11.1998
(51) Int. Cl.: A47L 13/16, A47L 7/02, C08J 9/00, C08J 9/26, C08L 1/02, C08J 9/06, D04H 1/42, B32B 5/24, C08K 5/00

(54) **SCHWAMMTUCH AUF CELLULOSEBASIS UND VERFAHREN ZUR HERSTELLUNG**
SPONGE TOWEL BASED ON CELLULOSE AND A METHOD FOR PRODUCING THE SAME
TISSU EPONGE A BASE DE CELLULOSE ET SON PROCEDE DE FABRICATION

(30) Priorität: 03.12.1997 DE 19753546
(43) Veröffentlichungstag der Anmeldung: 20.09.2000
(73) Patentinhaber: Kalle Nalo GmbH & Co. KG, 65203 Wiesbaden (DE)
(72) Erfinder: MANS, Leo, D-55120 Mainz (DE); HAMMER, Klaus-Dieter, D-55120 Mainz (DE)
(74) Vertreter: Zounek, Nikolai, Dipl.-Ing.
(86) Internationale Anmeldenummer: EP9807599
(87) Internationale Veröffentlichungsnummer: WO9927835

(56) Entgegenhaltungen:
- EP-A- 0 617 074
- EP-A- 0 712 889
- WO-A-95/11261
- WO-A-97/23552
- WO-A-97/42259
- WO-A-98/28360
- DE-U- 29 618 058
- US-A- 4 130 683
- US-A- 5 626 810

## Beschreibung

Die Erfindung betrifft ein mit einer Innenverstärkung versehenes Schwammtuch auf Basis von Cellulose sowie ein Verfahren zu dessen Herstellung. Das Schwammtuch hat eine hohe Wasseraufnahmefähigkeit und läßt sich in Haushalt und Industrie vielfältig für Putz- und Reinigungszwecke einsetzen.

Die Schwammtuchherstellung nach dem Viskoseverfahren ist seit langem bekannt. Darin wird zunächst Zellstoff, insbesondere Holzzellstoff, mit Natriumhydroxid und Schwefelkohlenstoff in eine alkalische Cellulosexanthogenatlösung, die sogenannte Viskoselösung, übergeführt. Parallel dazu werden Baumwollkämmlinge mit verdünnter, detergentienhaltiger NaOH entfettet. Die gereifte Viskoselösung wird dann mit Baumwollfasem vermischt. Das geschieht im allgemeinen mit Hilfe eines Kneters. Anstelle der Baumwollfasern können auch Viskosefasern als innere Verstärkung dienen. Anschließend wird Glaubersalz (= Natriumsulfat-Decahydrat) hinzugefügt und ebenfalls gleichmäßig vermischt. Diese Schwammtuch-Rohmasse wird dann auf einen Träger, beispielsweise ein gelochtes Endlosband, in der gewünschten Höhe aufgetragen. Es ist auch möglich, eine Mischung aus Viskoselösung und Glaubersalz auf ein Trägermaterial aus Kunststoff, beispielsweise ein Netz aus Polyethylenterephthalat (PET), aufzutragen. Die Regenerierung der Cellulose erfolgt dann in einem erwärmten, alkalischen Koagulationsbad. Sie kann auch in einem sauren Medium, beispielsweise verdünnter Schwefelsäure, durchgeführt werden. Dabei wird die innere Verstärkung in den Schwammtuchkörper eingebunden.

Das Glaubersalz weist einen sehr niedrigen Schmelzpunkt auf. Es wird daher in dem Koagulationsbad aufgeschmolzen und herausgelöst. Anstelle der Salzkristalle bleiben Poren und Hohlräume zurück. Schließlich wird das Schwammtuch ausgewaschen, um es von Salzresten und anhaftenden Reaktionsprodukten zu befreien. Nach dem Trocknen wird es in schmale Bahnen geschnitten, die wiederum aufgerollt werden. Die Rollenware kann dann zu Tüchern der gewünschten Größe weiter konfektioniert werden.

Das Viskoseverfahren ist jedoch technisch sehr aufwendig und teuer. Zudem sind erhebliche Anstrengungen notwendig, um die Umwelt nicht zu belasten. Eine unangenehme Begleiterscheinung bei dem Viskoseverfahren ist beispielsweise die Bildung von faulig riechendem Schwefelwasserstoff. Ein nach dem Viskoseverfahren hergestelltes Schwammtuch enthält noch Reste von CS₂ oder H₂S, die aufwendig ausgewaschen werden müssen. Bei der mehrstündigen Reifung der Viskoselösung werden die Cellulose-Polymerketten zudem mehr oder weniger stark abgebaut Das führt zu einer starken Verbreiterung der Verteilungskurve des Polymerisationsgrades (DP) der Celluloseketten. Selbst wenn ein Cellulose-Ausgangsmaterial mit gleichem Polymerisationsgrad verwendet wird, ist das Ergebnis nach der Regeneration daher nicht immer reproduzierbar. Die mechanische Stabilität des Schwammtuches schwankt dann u. a. auch je nach Polymerisationsgrad.

In der WO 97/42259 sind Schwammtücher, die Verstärkungsfasern enthalten, und Verfahren zu deren Herstellung offenbart. Die Fasern können als Additiv zugesetzt sein oder auch aus dem cellulosischen Ausgangsmaterial stammen, wenn dieses nur unvollständig aufgelöst wird. Das Auflösen des Cellulosematerials, das mit Wasserdampf unter hohem Druck vorbehandelt ist, erfolgt dabei allgemein mit stark alkalischen, wäßrigen Lösungen, bevorzugt mit NaOH-Lösungen. Neben einem Porenbildner wird stets auch noch ein Treibmittel eingesetzt, z. B. ein Tensid, wie Na-Laurylsulfat.

In der EP-A 712 889 sind Fasern enthaltende Cellulose/Aminoxid-Lösungen offenbart aus denen hauptsächlich Fasern, Papiere, Folien und Nahrungsmittelhüllen hergestellt werden. Daneben sind Schwämme erwähnt, jedoch keine Schwammtücher.

In der WO 97/23552 sind Cellulose-Schwämme (keine Schwammtücher) und Verfahren zu deren Herstellung beschrieben. Diese Schwämme werden aus einer Cellulose/NMMO-Lösung hergestellt, die mit einem Porenbildner und einem Treibmittel vermischt wird. Anschließend wird die Mischung Bedingungen ausgesetzt, bei denen sich das Treibmittel zersetzt, was ein Aufschäumen der Celluloselösung bewirkt. Auf diese Weise werden die für Schwämme typischen großen Poren gebildet, die in einem Schwammtuch unerwünscht sind.

Es stellte sich daher die Aufgabe, nach einem ökonomisch und ökologisch günstigeren Verfahren Schwammtuch herzustellen, das keine oder zumindest deutlich weniger störende Verunreinigungen enthält und eine gleichmäßig hohe Qualität aufweist.

Gelöst wird die Aufgabe mit einem Schwammtuch, das nach dem Aminoxid-Verfahren in Anwesenheit eines Porenbildners herstellbar ist. In diesem Verfahren werden Lösungen von Cellulose in einem Gemisch aus einem N-Oxid eines tertiären Amins und Wasser eingesetzt. Ein besonders geeignetes N-Oxid ist dabei das N-Methyl-morpholin-N-oid (NMMO).

Das Aminoxidverfahren als solches ist bereits bekannt. Bisher wurden nach diesem Verfahren insbesondere Fasern oder Folien auf Cellulosebasis hergestellt. In der AT-B 402 932 (Anmeldenr. 95-02100) ist die Herstellung von Celluloseschwamm aus einer Lösung von Cellulose in einem tertiären Aminoxid, vermischt mit einem Porenbildner und einem Treibmittel, beschrieben. Diese Mischung wird Bedingungen ausgesetzt, bei denen sich das Treibmittel unter Bildung von gasförmigen Produkten zersetzt und so ein Aufschäumen unter Bildung von relativ großen Hohlräumen bewirkt. Danach wird die aufgeschäumte Mischung mit Wasser in Kontakt gebracht, um die Cellulose zu fällen. Das Aminoxid läßt sich aus dem so erhaltenen Schwamm mit Wasser auswaschen. Treibmittel sind jedoch bei der Herstellung von Schwammtuch völlig ungeeignet, denn dadurch wäre weder die erforderliche mechanische Stabilität, noch die notwendige Abriebfestigkeit erreichbar.

Das erfindungsgemäße Schwammtuch läßt sich herstellen aus einer Rohmasse, die in einem Gemisch aus einem N-Oxid eines tertiären Amins und Wasser gelöste Cellulose, einen Porenbildner und eine Faserverstärkung umfaßt. Das N-Oxid ist vorzugsweise N-Methyl-morpholin-N-oxid. Die so hergestellte Rohmasse wird dann über eine Düse, vorzugsweise eine Breitschlitzdüse, an ein Trägerband angetragen. Mit Hilfe des (vorzugsweise gelochten) Trägerbandes wird es dann in ein sogenanntes Spinnbad transportiert. Dieses Bad besteht aus einer 5 bis 50 gew.-%igen wäßrigen Aminoxid-Lösung, bevorzugt einer 5 bis 50 gew.-%igen wäßrigen NMMO-Lösung. Das Spinnbad bewirkt die Ausfällung und Verfestigung der Cellulose. Die so hergestellte Schwammtuchbahn wird dann mit Wasser ausgewaschen und getrocknet.

Eine weitere Ausführungsform besteht darin, daß eine Masse, die in NMMO und Wasser gelöste Cellulose sowie einen Porenbildner enthält, von beiden Seiten an ein netzförmiges Material, beispielsweise ein Polyester-Netz, angetragen wird. Das so beschichtete Netz wird dann wie beschrieben durch Spinn- und Waschbäder geführt. Eine Innenverstärkung ist jedoch in jedem Fall erforderlich. Im Celluloseschwamm spielt die innere Verstärkung zugunsten des Wasseraufnahmevermögens dagegen nur eine untergeordnete Rolle.

Das nach dem erfindungsgemäßen Verfahren hergestellte Schwammtuch weist - unter sonst gleichen Rahmenbedingungen - eine höhere mechanische Stabilität und damit bessere Reißfestigkeit auf als das nach dem Viskoseverfahren hergestellte. Die Ursache wird in erster Linie darin gesehen, daß der bei der Reifung der Viskoselösung unvermeidlich auftretende Polymerabbau beim erfindungsgemäßen Verfahren nicht eintritt. Die Molekulargewichts-Verteilungskurve der Cellulose ist in dem erfindungsgemäßen Produkt praktisch identisch mit der Verteilungskurve des in das Verfahren eingesetzten Cellulose-Rohmatenals. Da auch dann kein Polymerabbau erfolgt, wenn zwischen dem Herstellen der Lösung und ihrer Koagulation ein längerer Zeitraum liegt, ist eine gleichbleibende Qualität gewährleistet. Das erfindungsgemäße Schwammtuch ist praktisch frei von unerwünschten Verunreinigungen wie Schwefelwasserstoff und Schwefelkohlenstoff. Es kann eine große Menge an Wasser aufnehmen und zurückhalten. Es ist darüber hinaus im allgemeinen auf natürlichem Weg abbaubar und kann daher ohne weiteres kompostiert werden.

Das bei der Herstellung des Schwammtuchs eingesetzte Aminoxid kann nahezu quantitativ zurückgewonnen und - nach entsprechender Aufkonzentrierung - erneut eingesetzt werden. Daher ist es vorteilhaft, wenn das Aminoxid in der Schwammtuchrohmasse mit dem im Spinnbad und in den nachfolgenden Bädern identisch ist. Das restliche Abwasser ist kaum noch mit Reststoffen belastet und hat daher nur einen geringen chemischen Sauerstoffbedarf (CSB).

Als Porenbildner dienen in dem erfindungsgemäßen Verfahren vorzugsweise anorganische Salze, die leicht wasserlöslich sind. Zu nennen sind insbesondere Alkali-, Erdalkali- und Ammoniumsalze anorganischer Säuren, wie Chloride (speziell NaCI und KCI, nicht jedoch MgCl₂), Sulfate (speziell Na S₂O₄ und MgSO₄), Phosphate (speziell Mg₃(PO₃)₂, Silikate (speziell Mg₂[SiO₄] = Forsterit) und Carbonate (speziell Na₂CO₃, CaCO₃ und (NH₄)₂CO₃). Der Durchmesser der Salzkristalle beträgt allgemein bis zu 2,5 mm, bevorzugt bis zu 2,0 mm. Dabei sollten nur etwa 1/5 der Kristalle einen Durchmesser von weniger als 0,3 mm aufweisen, da man sonst ein Schwammtuch mit einer verminderten Wasseraufnahmefähigkeit erhält. Der Anteil an Porenbildner beträgt allgemein 30 bis 90 Gew.-%, bevorzugt 70 bis 85 Gew.-%, jeweils bezogen auf das Gesamtgewicht der Schwammtuchrohmasse.

Eine geeignete Cellulosequelle ist Zellstoff, insbesondere gemahlener Holzzellstoff. Die in das erfindungsgemäße Verfahren eingesetzte Cellulose sollte einen Polymerisationsgrad DP von 300 bis 1.600, bevorzugt 400 bis 600, besitzen. Beim Vermischen der Cellulose mit dem wäßrigen NMMO (Wasseranteil etwa 40 Gew.-%) bildet sich zunächst eine Suspension. Unter Rühren und Erhitzen (etwa 70 bis 120 °C, bevorzugt 85 bis 95 °C) wird dann bei vermindertem Druck (bevorzugt etwa 40 bis 200 mbar) der Suspension ein Teil des Wassers entzogen. Dabei vermindert sich der Wasseranteil von etwa 40 Gew.-% auf etwa 7 bis 12 Gew.-% und die Suspension wandelt sich in eine praktisch homogene Lösung um. Der Brechungsindex der Lösung liegt bei etwa 1,4910 bis 1,4930. Sie enthält 5 bis 20 Gew.-%, bevorzugt 10 bis 15 Gew.-%, an gelöster Cellulose. Die Viskosität dieser Lösung liegt bei etwa 1.500 Pa s. Frisch bereitet ist die Lösung nur schwach alkalisch (pH etwa 7,8). Beim Stehen bilden sich jedoch aus dem NMMO basische Zersetzungsprodukte, die den pH-Wert erhöhen. Die Herstellung der Celluloselösung ist u.a. in der WO 97/31970 beschrieben. Die Celluloselösung wird dann mit den übrigen Komponenten vermischt, zweckmäßig in einem Kneter. In der so hergestellten Schwammtuchrohmasse beträgt der Anteil an Cellulose 0,5 bis 10,0 Gew.-%, bevorzugt 1,0 bis 5,0 Gew.-%, jeweils bezogen auf das Gesamtgewicht der Rohmasse.

Die Faserverstärkung besteht aus Naturfasern, vorzugsweise aus Baumwoll-, Hanf-, Flachs- oder Viskosefasern, die nach dem NMMO-Verfahren (Lyocell) hergestellt worden sind. Die Länge der Fasern liegt bei 5 bis 50 mm, bevorzugt bei 10 bis 30 mm. Dabei werden die Fasern in der Regel vorbehandelt zur Verbesserung der Kompatibilität mit der NMMO-Lösung. Der Anteil der Fasern beträgt 5 bis 50 Gew.-%, bevorzugt 10 bis 40 Gew.-%, jeweils bezogen auf das Trockengewicht des Schwammtuches.

Schwammtücher sind im trockenen Zustand relativ spröde. Um diesen Nachteil auszugleichen, können der Schwammtuch-Rohmasse weichmachende Substanzen hinzugefügt werden. Besonders geeignet sind Weichmacher, die nicht oder nur sehr langsam ausgewaschen werden und daher möglichst über die gesamte Gebrauchsdauer ihre Wirksamkeit behalten. Geeignet sind insbesondere Stärke und Stärkederivate, niedermolekulare Cellulosederivate, Polyvinylalkohol, Vinylpyrrolidon/Vinylalkohol-Copolymere, Polyvinylacetat, Vinylmethylether/Maleinsäureanhydrid-Copolymere (®Gantrez), Harnstoff, Hexamethylendiamin, Carrageenan, Alginate (insbesondere Natriumalginat), Guar und Guarderivate [insbesondere kationaktive Guarderivate (®Meyprofloc), Carboxymethyl-hydroxypropyl-guar (®Jaguar CMHP) und hochsubstituiertes Carboxymethylguar (®Jaguar CMHS)], Galaktomannan, Xanthangummi, Polysaccharide mit Seitenketten (®Rhodigel), Heteropolysaccharide (®Rhodicare), Alkylpolyethoxyammoniumlactat (®Genamin), Polyestermischpolymerisate (®Cassapret), Phosphorsäureester (®Hostaphat), Kondensationsprodukte auf der Basis gesättigter oder ungesättigter Fettsäuren verschiedener Kettenlänge und Taurin, Methyltaurin bzw. Hydroxyethansulfonsäure, N-Cocoylglutaminsäure-Mononatriumsalz (®Hostapon), Fettalkoholpolyglykolether (®Genapol), Phthalsäurediester oder quartäre Stickstoffverbindungen (®Leomin). Der Anteil an Weichmacher(n) beträgt 1 bis 15 Gew.-%, bevorzugt 2 bis 10 Gew.-%, bezogen auf das Trockengewicht des fertigen Schwammtuchs.

Das erfindungsgemäße Schwammtuch kann schließlich noch mit biocid - insbesondere fungicid, bakteriocid und/oder algicid - wirkenden Stoffen imprägniert sein (vgl. DE-U 296 18 058). Eine biocide Ausrüstung ist besonders dann sinnvoll, wenn befeuchtete Schwammtücher längere Zeit in einer Folienverpackung verbleiben. Besonders bevorzugte biocid wirkende Mittel sind dabei Isothiazolon-, Benzisothiazolon- und Benzimidazol-Derivate. Fungicid bzw. bakteriocid wirksam sind auch kationische, tensioaktive Ammoniumsalze mit langkettigen, gesättigten oder ungesättigten (C₆-C₂₄)Alkylgruppen, insbesondere (C₈-C₁₈)Alkyl-trimethyl-ammoniumchloride, Di(C₁₀-C₁₈)alkyl-dimethyl-ammoniumchloride oder Alkyl-benzyl-dimethyl-ammoniumchloride. Neben den Chloriden von tertiären Ammoniumverbindungen sind jedoch auch Bromide, Acetate, Propionate, Sorbate, Benzoate oder Sulfate. Solche Verbindungen sind beispielsweise in der EP-A 286 009 offenbart. Bacteriocid wirksam sind schließlich auch Dipyridylsulfid und dessen Bis-N-oxid oder 1-Alkyl- und 1-Alkenylpyridiniumsalze (beispielsweise 1-Lauryl-pyridiniumchlorid). Auch Aluminosilikate bzw. Zeolithe (®Zeomic der Shinanen Zeomic Co., Ltd. Japan, CAS-Nr. 1318-02-1), in denen Silber oder Kupfer eingebettet ist, zeigen biocide Wirkung. Die gleiche Wirkung kann auch durch Imprägnieren mit Glycerin oder Propylenglykol erreicht werden.

Schließlich können die erfindungsgemäßen Schwammtücher auch befeuchtet sein. Als Befeuchtungsmittel eignet sich besonders eine 2 bis 8 gew.-%ige Magnesiumchloridlösung, in der noch 0,2 Gew.-% eines Duftstoffes, z. B. eines Öls mit Zitronen-, Kiefernduft oder ähnlichem, emulgiert sein kann.

Teil der Erfindung ist auch das Verfahren zur Herstellung eines Schwammtuches auf Basis von Cellulose mit einer Innenverstärkung, das die folgenden Schritte umfaßt:
(a) Bereitstellen einer Mischung, die im N-Oxid eines tertiären Amins und Wasser gelöste Cellulose sowie mindestens einen Porenbildner und Fasern enthält,
(b) Ausstreichen der Mischung auf ein Transportband,
(c) Behandeln der Schicht mit einem Koagulationsbad aus einer verdünnten wäßrigen Aminoxidlösung, die den Porenbildner herauslöst,
(d) Auswaschen des verbleibenden Aminoxids,
(e) Trocknen der Schwammtuchbahn und
(f) Konfektionieren.

Die Schwammtuchrohmasse wird vorteilhaft durch Vermischen der einzelnen Bestandteile in einem Kneter hergestellt. Dabei hat es sich als günstig erwiesen, den Porenbildner und gegebenenfalls ein Farbpigment zuletzt einzumischen. Das Ausstreichen der Rohmasse auf das Transportband kann beispielsweise mit Hilfe einer Breitschlitzdüse erfolgen.

Unter dem Begriff "Konfektionieren" versteht der Fachmann in erster Linie das Schneiden der feuchten oder trockenen Schwammtuchbahnen auf die gewünschte Größe und das Verpacken, gegebenenfalls auch das Bedrucken.

In einer Variante des erfindungsgemäßen Verfahrens sind die Schritte (a) und (b) abgewandelt. Im Schritt (a) wird auf die Fasern verzichtet; dafür wird die Mischung im Schritt (b) über eine Düse in einer dünnen Schicht auf beiden Seiten eines Kunststoffnetzes aufgebracht.

Die nachfolgenden Beispiele erläutern die Erfindung. Prozente sind Gewichtsprozente, soweit nicht anders angegeben.

### Beispiel 1:

510 g gemahlener Holzzellstoff (®Cellunier F der Firma Rayonier) mit einem durchschnittlichen Polymerisationsgrad von 535 (nach der Cuoxam-Methode bestimmt) wurde in 5087 g einer 60 %igen NMMO-Lösung angemaischt. Der pH-Wert der Maische wurde dann mit NaOH auf einen Wert von 11 eingestellt. Unter Rühren und Heizen wurde dann im Vakuum bei steigender Temperatur Wasser abdestilliert, bis bei einem NMMO-Gehalt von 87,7 %, bezogen auf das Gesamtgewicht von Wasser und NMMO, das Monohydrat vorlag (erkennbar an einem Brechungsindex von 1,4820). Während dieser etwa 4 Stunden dauernden Phase wurde das Vakuum bei 1,333 bis 2,133 kPa (10 bis 16 Torr) gehalten. Nach weiterem 2- bis 3-stündigem Rühren bei etwa 85 bis 95 °C war der Zellstoff vollständig gelöst.

Damit weniger Wasser verdampft, wurde das Vakuum während dieser Zeit auf etwa 26,66 kPa (200 Torr) eingestellt. Der Brechungsindex pendelte sich dann bei etwa 1,4910 bis 1,4930 ein, was einem Wassergehalt von 7,5 bis 9 % entspricht.

In die so hergestellte Lösung wurden 850 g Baumwolle, die mit einer entsprechend erhitzten Lösung, bestehend aus Natronlauge und einem Entfettungsmittel, benetzt wurde, eingetragen und eingeknetet. In einem zweiten Knetprozeß wurden der Zellstoff-Baumwoll-Lösung unter Beibehaltung einer Temperatur, die die erforderliche Fluidität gewährleistet, 30 kg Natriumchlorid als Porenbildner und 3 g eines blauen Farbpigments zugesetzt.

Das erhaltene Schwammtuch hatte folgende Eigenschaften:

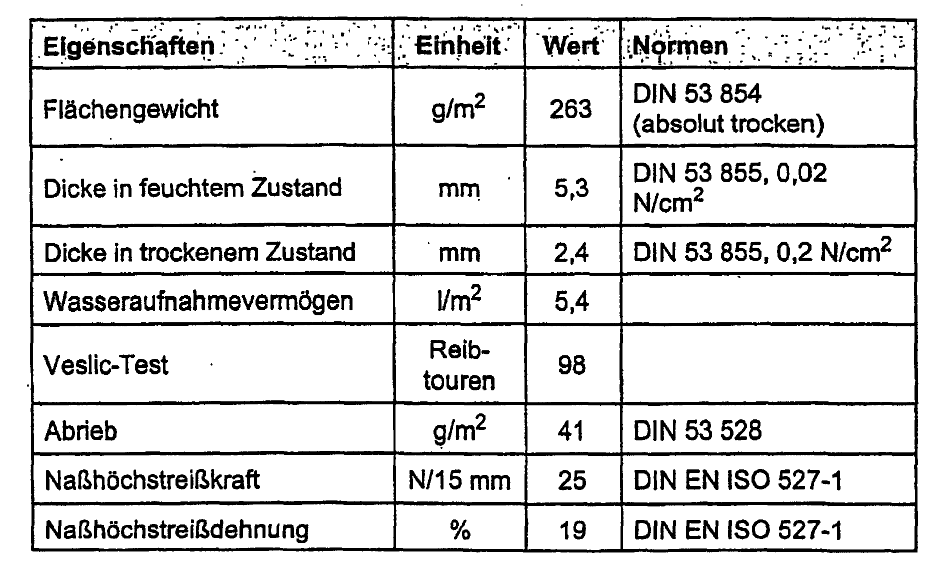

### Beispiel 2

Beispiel 1 wurde wiederholt. Die Menge des Porenbildners (NaCl) wurde dabei jedoch auf 25 kg verringert. Das erhaltene Schwammtuch hatte die folgenden Eigenschaften:

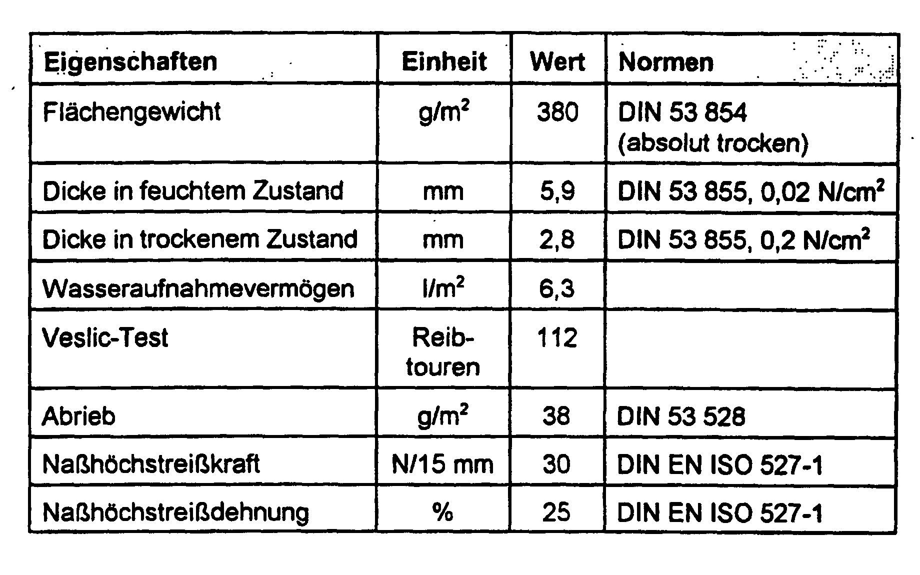

## Patentansprüche

1. Mit einer Innenverstärkung versehenes Schwammtuch auf Cellulosebasis, herstellbar nach dem Aminoxidverfahren mit mindestens einem Porenbildner jedoch ohne Verwendung von Treibmitteln.

2. Schwammtuch gemäß Anspruch 1, **dadurch gekennzeichnet, daß** das in dem Verfahren eingesetzte Aminoxid N-Methyl-morpholin-N-oxid ist.

3. Schwammtuch gemäß Anspruch 1 oder 2, **dadurch gekennzeichnet, daß** die Innenverstärkung aus Baumwollfasern, Viskosefasem oder einem Kunststoffnetz besteht.

4. Schwammtuch gemäß einem oder mehreren der Ansprüche 1 bis, 3, **dadurch gekennzeichnet, daß** es mindestens einen Weichmacher enthält.

5. Schwammtuch gemäß einem oder mehreren der Ansprüche 1 bis 3, **dadurch gekennzeichnet, daß** es mit einem biocid wirkenden Mittel imprägniert ist.

6. Verfahren zur Herstellung eines mit einer Innenverstärkung versehenen Schwammtuches auf Basis von Cellulose, **dadurch gekennzeichnet, daß**
(a) eine Mischung bereitgestellt wird, die im N-Oxid eines tertiären Amins und Wasser gelöste Cellulose sowie mindestens einen Porenbildner und Fasern, jedoch keine Treibmittel enthält,
(b) die Mischung auf ein Transportband ausgestrichen wird,
(c) die Schicht durch ein Koagulationsbad aus einer verdünnten wäßrigen Aminoxidlösung, die den Porenbildner herauslöst, geführt wird,
(d) das verbleibende Aminoxid ausgewaschen wird,
(e) die Schwammtuchbahn getrocknet und
(f) konfektioniert wird.

7. Verfahren zur Herstellung eines Schwammtuches auf Basis von Cellulose mit einer Innenverstärkung, **dadurch gekennzeichnet, daß**
(a) eine Mischung bereitgestellt wird, die im N-Oxid eines tertiären Amins und Wasser gelöste Cellulose sowie mindestens einen Porenbildner, jedoch keine Treibmittel enthält,
(b) die Mischung auf beiden Seiten eines Kunststoffnetzes aufgebracht wird,
(c) die Schicht durch ein Koagulationsbad aus einer verdünnten wäßrigen Aminoxidlösung geführt wird, die den Porenbildner herauslöst,
(d) das verbleibende Aminoxid ausgewaschen wird,
(e) die Schwammtuchschicht getrocknet und
(f) konfektioniert wird.

8. Verfahren gemäß Anspruch 6 oder 7, **dadurch gekennzeichnet, daß** das N-Oxid eines tertiären Amins N-Methyl-morpholin-N-oxid ist.

9. Verfahren gemäß Anspruch 6 oder 7, **dadurch gekennzeichnet, daß** das Koagulationsbad aus einer 5 bis 50 gew.-%igen wäßrigen Aminoxid-Lösung, besteht.

10. Verfahren gemäß Anspruch 6, **dadurch gekennzeichnet, daß** der Anteil der Fasern 5 bis 50 Gew.-%, bezogen auf das Trockengewicht des Schwammtuches, beträgt.

11. Verfahren gemäß Anspruch 6 oder 7, **dadurch gekennzeichnet, daß** der Porenbildner ein Alkali-, Erdalkali- oder Ammoniumsalz einer anorganischen Säure ist.

12. Verfahren gemäß Anspruch 11, **dadurch gekennzeichnet, daß** der Porenbildner Natrium- oder Magnesiumsulfat ist.

13. Verfahren gemäß Anspruch 6 oder 7, **dadurch gekennzeichnet, daß** der Anteil des Porenbildners 30 bis 90 Gew.-%, bezogen auf das Gesamtgewicht der Schwammtuchrohmasse, beträgt.

14. Verfahren gemäß Anspruch 6 oder 7, **dadurch gekennzeichnet, daß** der Anteil der Cellulose 0,5 bis 10,0 Gew.-%, bezogen auf das Gesamtgewicht der Schwammtuchrohmasse, beträgt.

15. Verfahren gemäß Anspruch 6 oder 7, **dadurch gekennzeichnet, daß** das Gemisch zusätzlich mindestens einen Weichmacher und/oder mindestens ein biocid wirkendes Mittel enthält.

16. Verfahren gemäß Anspruch 6 oder 7, **dadurch gekennzeichnet, daß** der Anteil an Weichmacher(n) 1 bis 15 Gew.-%, bezogen auf das Trockengewicht des fertigen Schwammtuchs, beträgt.

## Claims

1. A sponge cloth which is based on cellulose and has been provided with an internal reinforcement, obtainable by the amine oxide process containing at least one pore former without using a foaming agent .

2. The sponge cloth of claim 1, wherein the amine oxide used in the process is N-methylmorpholine N-oxide.

3. The sponge cloth of claim 1 or 2, wherein the internal reinforcement comprises cotton fibers, viscose fibers or a polymeric net.

4. The sponge cloth of one or more of claims 1 to 3, including at least one plasticizer.

5. The sponge cloth of one or more of claims 1 to 3, impregnated with a biocidally active agent.

6. A process for producing a sponge cloth which is based on cellulose and has been provided with an internal reinforcement, which comprises
(a) providing a mixture which includes cellulose dissolved in the N-oxide of a tertiary amine and water and also at least one pore former and fibers but no foaming agent,
(b) spreading the mixture onto a transportation belt,
(c) passing the layer through a coagulation bath comprising a dilute aqueous amine oxide solution to dissolve out the pore former,
(d) washing the remaining amine oxide out,
(e) drying the sponge cloth web and
(f) end-iteming it.

7. A process for producing a sponge cloth which is based on cellulose and has an internal reinforcement, which comprises
(a) providing a mixture which includes cellulose dissolved in the N-oxide of a tertiary amine and water and also at least one pore former but no foaming agent,
(b) applying the mixture to both sides of a polymeric net,
(c) passing the layer through a coagulation bath comprising a dilute aqueous amine oxide solution to dissolve out the pore former,
(d) washing the remaining amine oxide out,
(e) drying the sponge cloth layer and
(f) end-iteming it.

8. The process of claim 6 or 7, wherein the N-oxide of a tertiary amine is N-methylmorpholine N-oxide.

9. The process of claim 6 or 7, wherein the coagulation bath comprises a 5 to 50% by weight aqueous amine oxide solution.

10. The process of claim 6, wherein the fibers fraction is 5 to 50% by weight based on the dry weight of the sponge cloth.

11. The process of claim 6 or 7, wherein the pore former is an alkali metal, alkaline earth metal or ammonium salt of an inorganic acid.

12. The process of claim 11, wherein the pore former is sodium sulfate or magnesium sulfate.

13. The process of claim 6 or 7, wherein the pore former fraction is 30 to 90% by weight based on the total weight of the sponge cloth raw material.

14. The process of claim 6 or 7, wherein the cellulose fraction is 0.5 to 10.0% by weight based on the total weight of the sponge cloth raw material.

15. The process of claim 6 or 7, wherein the mixture additionally includes at least one plasticizer and/or at least one biocidally active agent.

16. The process of claim 6 or 7, wherein the plasticizer fraction is 1 to 15% by weight based on the dry weight of the finished sponge cloth.

## Revendications

1. Tissu éponge à base de cellulose, muni d'un renfort intérieur, pouvant être fabriqué par le procédé utilisant un oxyde d'amine avec au moins un agent porogène mais sans utilisation d'agents d'expansion.

2. Tissu éponge selon la revendication 1, **caractérisé en ce que** l'oxyde d'amine utilisé dans le procédé est le N-oxyde de N-méthylmorpholine.

3. Tissu éponge selon la revendication 1 ou 2, **caractérisé en ce que** le renfort intérieur est constitué de fibres de coton, de fibres de viscose ou d'un réseau de matière plastique.

4. Tissu éponge selon une ou plusieurs des revendications 1 à 3, **caractérisé en ce qu'**il contient au moins un plastifiant.

5. Tissu éponge selon une ou plusieurs des revendications 1 à 3, **caractérisé en ce qu'**il est imprégné d'un agent à activité biocide.

6. Procédé pour la fabrication d'un tissu éponge à base de cellulose, muni d'un renfort intérieur, **caractérisé en ce que**
(a) on prépare un mélange qui contient de la cellulose dissoute dans le N-oxyde d'une amine tertiaire et de l'eau, ainsi qu'au moins un porogène et des fibres, mais ne contient pas d'agent d'expansion,
(b) on applique le mélange sur une bande transporteuse,
(c) on fait passer la couche dans un bain de coagulation constitué d'une solution aqueuse diluée d'oxyde d'amine, qui élimine par dissolution le porogène,
(d) l'oxyde d'amine résiduel est éliminé par lavage,
(e) la bande de tissu éponge est séchée et
(f) confectionnée.

7. Procédé pour la fabrication d'un tissu éponge à base de cellulose, muni d'un renfort intérieur, **caractérisé en ce que**
(a) on prépare un mélange qui contient de la cellulose dissoute dans le N-oxyde d'une amine tertiaire et de l'eau, ainsi qu'au moins un porogène, mais ne contient pas d'agent d'expansion,
(b) on applique le mélange sur les deux côtés d'un réseau de matière plastique,
(c) on fait passer la couche dans un bain de coagulation constitué d'une solution aqueuse diluée d'oxyde d'amine, qui élimine par dissolution le porogène,
(d) l'oxyde d'amine résiduel est éliminé par lavage,
(e) la couche de tissu éponge est séchée et
(c) confectionnée.

8. Procédé selon la revendication 6 ou 7, **caractérisé en ce que** le N-oxyde d'une amine tertiaire est le N-oxyde de N-méthylmorpholine.

9. Procédé selon la revendication .6 ou 7, **caractérisé en ce que** le bain de coagulation est constitué d'une solution aqueuse d'oxyde d'amine à 5-50 % en poids.

10. Procédé selon la revendication 6, **caractérisé en ce que** la proportion des fibres va de 5 à 50 % en poids, par rapport au poids sec du tissu éponge.

11. Procédé selon la revendication 6 ou 7, **caractérisé en ce que** le porogène est un sel alcalin, alcalino-terreux ou d'ammonium d'un acide minéral.

12. Procédé selon la revendication 11, **caractérisé en ce que** le porogène est le sulfate de sodium ou de magnésium.

13. Procédé selon la revendication 6 ou 7, **caractérisé en ce que** la proportion du porogène va de 30 à 90 % en poids, par rapport au poids total de la masse brute de tissu éponge.

14. Procédé selon la revendication 6 ou 7, **caractérisé en ce que** la proportion de la cellulose va de 0,5 à 10,0 % en poids, par rapport au poids total de la masse brute de tissu éponge.

15. Procédé selon la revendication 6 ou 7, **caractérisé en ce que** le mélange contient en outre au moins un plastifiant et/ou au moins un agent à activité biocide.

16. Procédé selon la revendication 6 ou 7, **caractérisé en ce que** la proportion du(des) plastifiant(s) va de 1 à 15 % en poids, par rapport au poids sec du tissu éponge final.
